# EUROPÄISCHE PATENTANMELDUNG

(11) **EP 2 520 542 A1**
(43) Veröffentlichungstag der Anmeldung: **07.11.2012**
(21) Anmeldenummer: 12002806.3
(22) Anmeldetag: 21.04.2012
(51) Int. Cl.: C01B 3/38, B01J 8/04

(54) **Reformer**

(30) Priorität: 04.05.2011 DE 102011100417
(71) Anmelder: Vaillant GmbH, 42859 Remscheid (DE)
(72) Erfinder: Badenhop, Thomas, 51688 Wipperfürth (DE); Schellen, Marc, 50733 Köln (DE)
(74) Vertreter: Hocker, Thomas

(57) **Zusammenfassung**

Die Erfindung betrifft einen katalytischen Reformer zur Umwandlung von Brennstoff oder einem Brennstoffgemisch aus Brennstoff und Luft und/oder Wasserdampf in ein wasserstoffhaltiges Gas für ein Brennstoffzellen-System. Der Reformer ist aufgeteilt ist in eine erste Zone für eine exotherme Reaktion in eine dahinter angeordnete zweite Zone für eine endotherme Reaktion. Es sind Mittel zur Wärmeübertragung vorgesehen, mit denen Wärme von der ersten Zone zur zweiten Zone übertragen wird. Erfindungsgemäß sind Trennwände und/oder die Wandung der Zonen elektrisch beheizbar.

## Beschreibung

Die Erfindung betrifft einen katalytischen Reformer für ein Brennstoffzellensystem.

Ein Brennstoffzellen-System besteht aus einer Brennstoffzelle bzw. einem Brennstoffzellen-Stapel und Zusatzaggregaten wie einem Reformer und gegebenenfalls einem Nachbrenner.

Technische Brennstoffzellen benötigen in der Regel Wasserstoff als Brennstoff. Eine Wasserstoffinfrastruktur für die Versorgung stationärer Brennstoffzellensysteme, beispielsweise in Gebäuden, steht auch mittelfristig nicht zur Verfügung. Dieser Mangel wird dadurch beseitigt, dass stationäre Brennstoffzellensysteme fossile Brennstoffe nutzen, die in Gebäuden verfügbar sind. Solche Brennstoffe sind beispielsweise Erdgas, Flüssiggas (LPG), Heizöl sowie leichte und schwere Gasöle und Kohle. Des Weiteren können auch biogene Brennstoffe, wie Holz, Holzgas, Biogas oder "Bioerdgas" in solchen Systemen zum Einsatz kommen. Bei der Verwendung der o.g. Brennstoffe ist der Brennstoffzelle ein Reformer vorgeschaltet, der das benötigte wasserstoffreiche Brenngas aus dem Brennstoff erzeugt.

Aufgrund der gut ausgebauten Infrastruktur bietet sich Erdgas, welches überwiegend aus Methan besteht, besonders an. In dem dabei eingesetzten Reformer wird das Erdgas katalytisch zu Wasserstoff, Kohlenmonoxid und Kohlendioxid umgesetzt. Der Katalysator besteht aus einem Katalysatorträger, z.B. Codierit oder Metall und einer katalytisch wirksamen Beschichtung, die bei Temperaturen je nach eingesetztem Verfahren zwischen 400 und 900 °C betrieben werden. Die dazu notwendige Wärme wird entweder durch Vorwärmung der Edukte oder durch Beheizung mit Abwärme der Brennstoffzelle beziehungsweise eines der Brennstoffzelle nachgeschalteten Nachbrenners eingebracht.

Die Vorwärmung des Reformers bedingt jedoch einen baulichen Aufwand, da verschiedene Aggregate wärmeleitend miteinander verbunden werden müssen oder zumindest so angeordnet werden müssen, dass die Wärme über Wärmestrahlung übertragen wird. Darüber hinaus wird die Modularisierung einer Brennstoffzellensystem-Baureihe dadurch erschwert.

Es ist aus der WO 01/94005 A1 ein Reaktor bekannt, bei dem Zonen mit endothermer und exothermer Reaktion so wärmeleitend miteinander verbunden sind, dass die in den exothermen Zonen genutzte Wärme in der endothermen Zone genutzt wird. Dies ist für kontinuierliche chemische Prozesse geeignet, hat jedoch bei instationären Prozessen den Nachteil, dass der Reaktor eine Aufwärmphase durchlaufen muss, bis optimale Ergebnisse erbracht werden. Aus der Patentschrift DE 101 95 284 B1 ist es zwar bekannt, ein zuströmendes Prozessgas elektrisch zu beheizen, jedoch ist die Wärmekapazität des zuströmenden Prozessgases nicht ausreichend, den Reformer in kurzer Zeit auf Betriebstemperatur zu bringen.

Es ist daher Aufgabe der Erfindung, einen Reformer für ein einfach aufgebautes Brennstoffzellensystem bereitzustellen, das sich schnell auf die Betriebstemperatur bringen lässt.

Diese Aufgabe wird erfindungsgemäß durch einen Reformer gemäß dem unabhängigen Anspruch gelöst, mit dem der zur Verfügung stehende Brennstoff mit Luft und/oder Wasserdampf zu einem Brennstoffgemisch vermischt und in ein wasserstoffhaltiges Gas umgewandelt wird. Der Reformer ist in zwei Zonen aufgeteilt. Dabei ist der Reformer so aufgebaut, dass in der ersten Zone exotherme Reaktionen, beispielsweise Oxidation ablaufen und in der zweiten Zone endotherme Reaktionen. Die in der ersten Zone entstehende Wärme kann dabei zu Erwärmung der zweiten Zone genutzt werden. Dazu sind Mittel zur Wärmeübertragung vorgesehen, die die Wärme von der ersten Zone zur zweiten zu übertragen. Durch die Wahl geeigneter Katalysator-Materialien für die erste Zone und die zweite Zone können die exothermen und endothermen Reaktionen den jeweiligen Zonen zugeordnet werden. Erfindungsgemäß sind die Trennwände und/oder die Wandung der zonen elektrisch beheizbar, beispielsweise in Form einer Widerstandsheizung. Dadurch ist der Reformer für die Startphase, während dieser noch kalt ist, beheizbar.

In einer bevorzugten Weiterbildung weisen die Trennwände und/oder die Wandung einen metallischen Grundträger auf.

In einer Weiterbildung der Erfindung sind die Trennwände und die Wandung des Gehäuses mit einem Katalysatormaterial beschichtet. Die Auswahl des Katalysatormaterials richtet sich nach der Aufteilung in die erste und die zweite Zone.

In einer bevorzugten Ausführungsform der Erfindung sind die erste und die zweite Zone benachbart in einem gemeinsamen Gehäuse angeordnet. Dabei weisen die erste und die zweite Zone eine gemeinsame Trennwand auf, über die die Wärme übertragen werden kann. Dies erfolgt beispielsweise über Wärmeleitung, Konvektion und/oder Wärmestrahlung.

In einer alternativen Ausführungsform des Reformers ist zwischen der ersten Zone und der zweiten Zone eine Zwischenzone angeordnet. Wiederum weisen die erste Zone und die Zwischenzone sowie die Zwischenzone und die zweite Zone jeweils eine gemeinsame, gut Wärme übertragende Trennwand auf.

In einer Weiterbildung der alternativen Ausführungsform des Reformers sind die Trennwände zwischen der erste Zone und der Zwischenzone sowie der zwischen Zone und der zweiten Zone so zueinander angeordnet, dass eine Wärmeübertragung in Form von Wärmestrahlung ermöglicht wird. Dadurch wird einerseits das in die zweite Zone einströmende Gasgemisch zusätzlich erwärmt. Andererseits wird durch die Wärmestrahlung die Trennwand zwischen der Zwischenzone und der zweiten Zone erwärmt

In einer anderen Weiterbildung ist in dem gemeinsamen Gehäuse zusätzlich eine Vorwärmzone vorgesehen, in der die in der ersten Zone entstehende Wärme genutzt wird, um den zu reformierenden Brennstoff vorzuwärmen. Auch hier erfolgt die Wärmeübertragung durch eine gemeinsame Trennwand zwischen erste Zone und Vorwärmzone. Durch die Vorwärmzone wird der Wärmeverlust durch das Gehäuse verringert.

In einer besonders bevorzugten Ausführungsform dieser Weiterbildung erfolgt die Mischung der Luft mit dem Brennstoff zu einem Brennstoffgemisch zwischen der Vorwärmzone und der ersten Zone. Dadurch wird eine gefährliche Erhitzung des Brennstoffgemisches vor der ersten Zone vermieden.

In einer vorteilhaften Ausführungsform sind die einzelnen Zonen, zumindest aber die erste und die zweite Zone koaxial angeordnet. Grundsätzlich ist es vorteilhaft, dass die Trennwände eine möglichst große Oberfläche aufweisen. Dies wird bei der Koaxialbauweise in besonders vorteilhafter Weise erreicht.

Die Erfindung wird nun anhand der Figuren detailliert erläutert.

Es stellt dar:
- Figur 1:: Einen erfindungsgemäßen Reformer,
- Figur 2:: eine Aufführungsvariante des erfindungsgemäßen Reformers,
- Figur 3:: eine weitere Aufführungsvariante des erfindungsgemäßen Reformers.

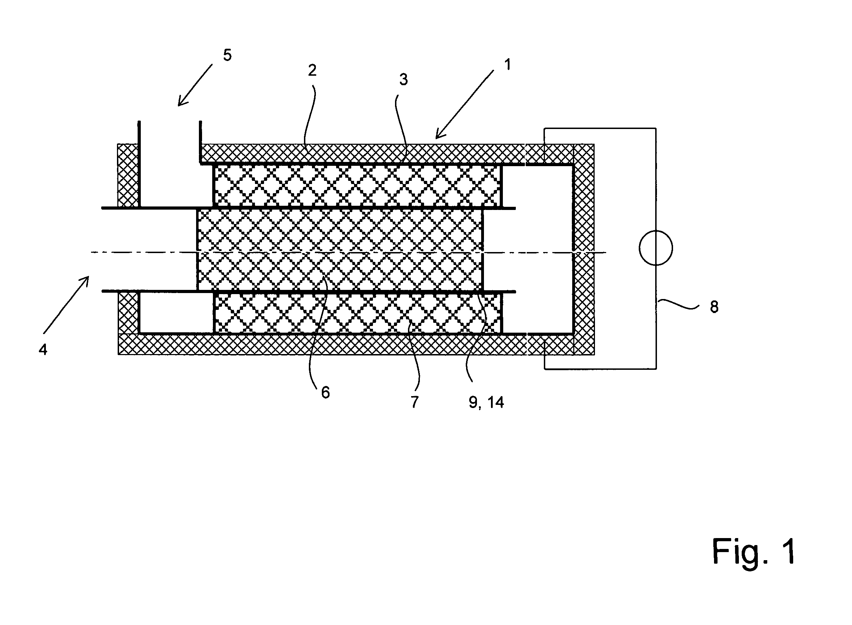

In Figur 1 ist ein erfindungsgemäßer Reformer dargestellt. Der Reformer ist von einem Gehäuse 1 umschlossen, dass sich aus einer Wandung 3 und einer Isolation 2 zusammensetzt. Der Reformer weist einen Einlass 4 für das Brennstoff-Luft-Gemisch auf. Das reformierte wasserstoffhaltige Gas wird über den Auslass 5 herausgeführt und einer hier nicht dargestellten Brennstoffzelle zugeführt. Der Reformer weist eine erste Zone 6 und eine konzentrisch dazu angeordnete zweite Zone 7 auf. Dabei ist die erste Zone 6 unmittelbar hinter dem Einlass 4 für das Brennstoff-Luft-Gemisch angeordnet. An dem Einlass 4 für das Brennstoff-Luft-Gemisch gegenüberliegenden Ende der ersten Zone 6 wird das Gas umgelenkt und durch die hier ringförmige und koaxial zur ersten Zone 6 angeordnete zweite Zone 7 geleitet. Die koaxiale Anordnung der Zonen hat den Vorteil, dass einerseits eine kompakte Bauweise des Reformers ermöglicht wird, andererseits die Trennwand 14 zwischen der ersten Zone 6 und der zweiten Zone 7 eine große Oberfläche aufweist. Die Trennwand 14 stellt zugleich ein Mittel zur Wärmeübertragung 9 dar, das die Wärme, die durch die exotherme Reaktionen in der ersten Zone 6 entsteht, zur zweiten Zone 7 geleitet wird, wo eine endotherme Reaktionen abläuft. In der ersten Zone 6 sowie in der zweiten Zone 7 sind Katalysatormaterialien vorgesehen, die den Ablauf der exothermen Reaktion in der ersten Zone 6 sowie der endothermen Reaktion in der zweiten Zone 7 ermöglicht.

Die Reaktionen in Zone 1 und und Zone 2 für die Methanreformierung sind nachstehend zusammengefasst. Erdgase bestehen überwiegend aus Methan (CH4). Methanreformierung:

| | | |
|---|---|---|
| CH4 + 2 H2O | ⇔ | 4 H2 + CO2 |
| CH4 + H2O | ⇔ | 3 H2 + CO |
| CH4 + 2 O2 | ⇔ | 2 H2O + CO2 |
| CH4 + CO2 | ⇔ | 2 H2 + CO |
| CH4 +2 CO | ⇔ | 3 C + 2 H2O |
| C + CO2 | ⇔ | 2 CO |
| C + 2 H2 | ⇔ | CH4 |
| C+0,5 O2 | ⇔ | CO |
| C + O2 | ⇔ | CO2 |
| CO + H2O | ⇔ | H2 + CO2 |
| CO + 0,5 O2 | ⇔ | CO2 |
| CO + H2 | ⇔ | C + H2O |
| H2+0,5 O2 | ⇔ | H2O |

In Zone 1 laufen die oxidativen Reaktionen und in Zone 2 die Reformierungsreaktionen, die zumeist endotherm sind, bevorzugt ab

Die in Zone 1 verwendete katalytische Beschichtung solll oxidative Reaktionen bevorzugen. Solche bespielsweise platin- oder palladiumhaltige Katalysatoren. Aber auch edelmetallfrei Katalysatoren, wie z.B. managnsubstituiertes Bariumhexaaluminat können in Betracht gezogen werden.

In der Reformerinerungszone (Zone 2) kommen im Wesentlichen typische Reformerkatalysatoren zum Einsatz, wie beispielsweise kupfer-, nickel- oder platinhaltige katalytische Beschichtungen zum Einsatz.

Die Trennwand 14 ist aus einem Material gefertigt, dass gut Wärme leitet. Ebenso wird ein guter Wärmeübergang zwischen der ersten Zone 6 und der Trennwand 14 sowie der Trennwand 14 und der zweiten Zone 6 sichergestellt. Die Trennwand 14 und/oder die Wandung 3 sind aus einem elektrisch leitenden Material, das durch eine elektrische Beheizung 8, die hier symbolisch als Spannungsquelle dargestellt ist, beheizbar ist.

Die Aufführung des erfindungsgemäßen Reformers ist nicht nur eine koaxiale Bauform beschränkt. Vielmehr ist erfindungsgemäß jede Bauform, bei der eine erste und zweite Zone 6, 7 mit einer gut Wärme übertragenden gemeinsamen Trennwand 19 Wärme leitend miteinander verbunden sind, eingeschlossen. So ist es beispielsweise denkbar, die Zonen 6, 7 plattenförmig auszubilden und je eine Zone nebeneinander anzuordnen. Ebenso ist es möglich, in Form eines Stapels eine Vielzahl von ersten und zweiten Zonen 6, 7 abwechselnd anzuordnen.

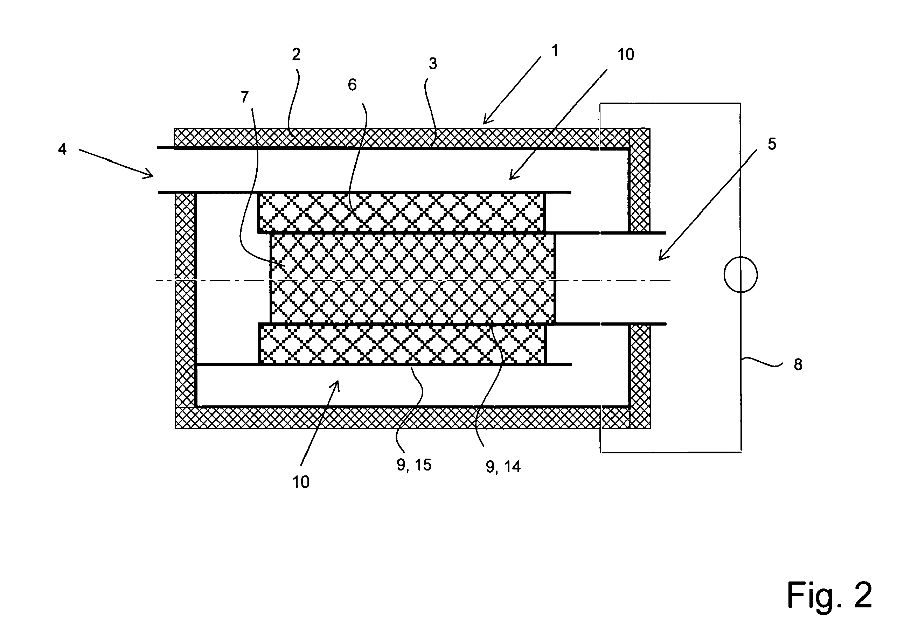

Figur 2 stellt eine Ausführungsvariante des in Figur 1 dargestellten Reformers dar. Aus Gründen der Übersichtlichkeit wird hier nur auf die Unterschiede zu dem in Figur 1 dargestellten Reformer eingegangen.

Im Gegensatz zu dem Reformer in Figur 1 weist der in Figur 2 gezeigte Reformer drei koaxial angeordnete Zonen auf. Dies sind von außen nach innen und zugleich in Strömungsrichtung des Brennstoff-Luft-Gemisches zunächst eine Vorwärmzone 10. Koaxial dazu angeordnet und innerhalb der ringförmigen Vorwärmzone 10 ist die ebenfalls ringförmig ausgeführte erste Zone 6 vorgesehen. Eine erste Trennwand 15 zwischen der Vorwärmzone und der erste Zone, die ein Mittel zur Wärmeübertragung 9 darstellt, beträgt die Wärme von der ersten Zone auf die Vorwärmzone. Ebenfalls koaxial dazu und im inneren Bereich des Reformers ist die zweite Zone 7 angeordnet. Die Anordnung im Kern hat den Vorteil, dass die Wärme hier nicht nach außen abgeleitet wird. Ebenfalls hat die Vorwärmzone am Außenumfang eine thermisch isolierende Wirkung. Die nach außen abgeführte Verlustwärme der ersten Zone wird in der Vorwärmzone auf das Brennstoff-Luft-Gemisch übertragen und so der ersten Zone wieder zugeführt. Es liegt in dem Vermögen eines Fachmanns, die Wärmeleitungs- und Wärmestrahlungswerte der Trennwände so zu gestalten, dass sich im Betrieb gewünschten und zulässigen Temperaturen in der ersten und der zweiten Zone einstellen.

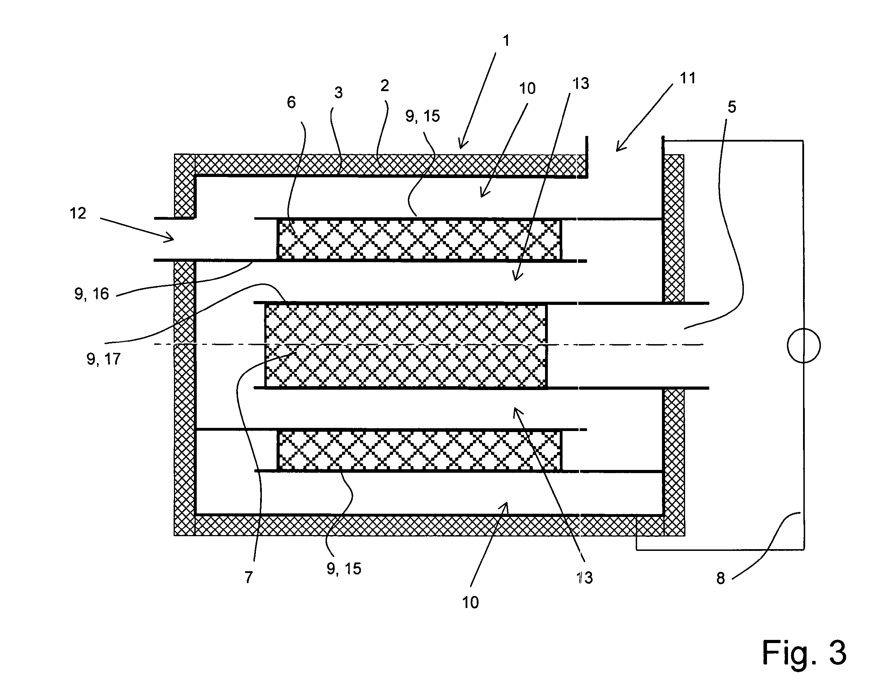

Figur 3 stellt eine weitere Ausführungsvariante des in Figur 2 dargestellten Reformers dar. Wesentlicher Unterschied ist, dass die Luft und der Brennstoff über eine Luftzufuhr 11 und eine Brennstoffzufuhr 12 getrennt zugeführt werden und sich das Brennstoff-Luft-Gemisch erst unmittelbar vor der ersten Zone 6 bildet. Dabei wird die über Luftzufuhr 11 zugeführte Luft zunächst durch eine Vorwärmzone 10 geleitet und dort vorgewärmt. Dies hat den Vorteil, dass das Brennstoff-Luft-Gemisch nicht erhöhten Temperaturen ausgesetzt wird, bevor es durch die Zone 1 geleitet wird.

Weiterhin weist der Reformer in Figur 3 eine Zwischenzone 13 auf, die zwischen der ersten Zone der zweiten Zone angeordnet ist. Eine gemeinsame zweite Trennwand 16 ist zwischen der ersten Zone 6 und der Zwischenzone 13 angeordnet und eine dritte Trennwand 17 ist zwischen der Zwischenzone 13 und der zweiten Zone 7 angeordnet. Die Trennwände 16, 17 stellen jeweils ein Mittel zur Wärmeübertragung 9 dar. Da in diesem Ausführungsbeispiel die zweite Trennwand 16 und die dritte Trennwand 17 parallel zueinander angeordnet sind, erfolgt auch eine Wärmeübertragung mittels Wärmestrahlung direkt von der zweiten Trennwand 16 auf die dritte Trennwand 17 und damit von der ersten Zone 6 auf die zweite Zone 7.

Auch die Zonen des in Figur 3 dargestellten Reformers sind bevorzugt koaxial angeordnet. Es ist jedoch auch hier jede andere Anordnung denkbar und erfindungsgemäß eingeschlossen.

### Bezugszeichenliste

- 1: Gehäuse
- 2: Isolation
- 3: Wandung
- 4: Einlass Brennstoffgemisch
- 5: Auslass
- 6: Erste Zone
- 7: Zweite Zone
- 8: Elektrische Beheizung
- 9: Mittel zur Wärmeübertragung
- 10: Vorwärmzone
- 11: Luftzufuhr
- 12: Brennstoffzufuhr
- 13: Zwischenzone
- 14: Trennwand
- 15: erste Trennwand
- 16: zweite Trennwand
- 17: dritte Trennwand

## Patentansprüche

1. Katalytischer Reformer zur Umwandlung von Brennstoff oder einem Brennstoffgemisch aus Brennstoff und Luft und/oder Wasserdampf in ein wasserstoffhaltiges Gas für ein Brennstoffzellen-System, wobei der Reformer aufgeteilt ist in eine erste Zone (6), die für eine exotherme Reaktion vorgesehen ist und in eine in Strömungsrichtung des Brennstoffs dahinter angeordnete zweite Zone (7), die für eine endotherme Reaktion vorgesehen ist, und dass Mittel zur Wärmeübertragung (9) vorgesehen sind, mit denen Wärme von der ersten Zone (1) zur zweiten Zone (2) übertragen wird, wobei die erste (6) und die zweite Zone (7) von Trennwänden (14, 15, 16, 17) und/oder einer Wandung (3) umschlossen sind **dadurch gekennzeichnet, dass** die Trennwände (14, 15, 16, 17) und/oder die Wandung (3) elektrisch beheizbar sind.

2. Reformer nach Anspruch 1, **dadurch gekennzeichnet, dass** die Trennwände (14, 15, 16, 17) und/oder die Wandung (3) einen metallischen Grundträger aufweisen.

3. Reformer nach Anspruch 1 oder 2, **dadurch gekennzeichnet, dass** die Trennwände (14, 15, 16, 17) und/oder die Wandung (3) mit einem Katalysatormaterial beschichtet ist.

4. Reformer nach einem der Ansprüche 1 bis 3, **dadurch gekennzeichnet, dass** die erste (6) und die zweite Zone (7) benachbart in einem gemeinsamen Gehäuse (1) vorgesehen sind und dass das Mittel zur Wärmeübertragung (9) eine gut wärmeleitende gemeinsame Trennwand (14) zwischen der ersten (6) und der zweiten Zone (7) ist, die die erste Zone (6) und die zweite Zone (7) thermisch miteinander verbindet.

5. Reformer nach einem der Ansprüche 1 bis 3, **dadurch gekennzeichnet, dass** die erste (6) und die zweite Zone (7) in einem gemeinsamen Gehäuse (1) vorgesehen sind und im gemeinsamen Gehäuse eine Zwischenzone (13) vorgesehen ist, die in Strömungsrichtung des Brennstoffs zwischen der ersten Zone (6) und der zweiten Zone (7) angeordnet ist, wobei die erste Zone (6) und die Zwischenzone (13) durch ein Mittel zur Wärmeübertragung (9) in Form einer gut wärmeleitenden gemeinsamen zweiten Trennwand (16) thermisch miteinander verbunden sind sowie die Zwischenzone (13) und die zweite Zone (7) durch ein Mittel zur Wärmeübertragung (9) in Form einer gut wärmeleitenden gemeinsamen dritten Trennwand (17) thermisch miteinander verbunden sind.

6. Reformer nach Anspruch 5, **dadurch gekennzeichnet, dass** die erste und die zweite Trennwand so gegenüberliegend angeordnet sind, dass eine Wärmeübertragung per Wärmestrahlung von der zweiten Trennwand (16) auf die dritte Trennwand (17) ermöglicht wird.

7. Reformer nach einem der vorhergehenden Ansprüche, **dadurch gekennzeichnet, dass** im gemeinsamen Gehäuse eine Vorwärmzone (10) vorgesehen sind, die in Strömungsrichtung des Brennstoffs vor der ersten Zone (6) angeordnet ist und mit der ersten Zone ein Mittel zur Wärmeübertragung (9) in Form einer gut wärmeleitenden gemeinsamen ersten Trennwand (15) aufweist.

8. Reformer nach Anspruch 7, **dadurch gekennzeichnet, dass** der Reformer zur Bildung des Brennstoff-Luft-Gemisches eine Luftzufuhr (11) und eine separate Brennstoffzufuhr (12) aufweist und dass in Strömungsrichtung die Luftzufuhr (11) vor der Vorwärmzone (10) und die Brennstoffzufuhr (12) hinter der Vorwärmzone (10) angeordnet ist.

9. Reformer nach einem der vorhergehenden Ansprüche, **dadurch gekennzeichnet, dass** die erste Zone (6), die zweite Zone (7) und soweit vorhanden die Vorwärmzone (10) und/oder die Zwischenzone (13) so angeordnet sind, dass zumindest zwei der Zonen, bevorzugt alle Zonen koaxial angeordnet sind.
